Europäisches Patentamt

European Patent Office

Office européen des brevets

(11) Publication number: **0 371 377**
**A2**

## EUROPEAN PATENT APPLICATION

(21) Application number: **89121517.0**

(51) Int. Cl.5: **G06F 3/14**

(22) Date of filing: **21.11.89**

(30) Priority: **01.12.88 US 278862**

(43) Date of publication of application:
**06.06.90 Bulletin 90/23**

(84) Designated Contracting States:
**DE FR GB IT**

(71) Applicant: **Bull HN Information Systems Inc.**
**300 Concord Road**
**Billerica, MA 01821(US)**

(72) Inventor: **Bailey, Christopher R. M.**
**42 Meadow Drive Hollis**
**Hillsboro New Hampshire(US)**
Inventor: **Stafford, John P.**
**24 Kennedy Drive Nashua**
**Hillsboro New Hampshire(US)**
Inventor: **Kepple, James M.**
**55 Fairway Drive Merrimack**
**Hillsboro New Hampshire(US)**
Inventor: **Ng, Randy**
**90 Acorn Drive**
**Randolph Norfolk Massachusetts(US)**
Inventor: **Kelley, George E.**
**22 Court Side Way Manchester**
**Hillsboro New Hampshire(US)**
Inventor: **Lief, Gerald A.**
**26 Beacon St., Apt. 8D**
**Burlington Middlesex Massachusetts(US)**
Inventor: **Stopera, Peter**
**29 Meadowview Circle Nashua**
**Hillsboro New Hampshire(US)**

(74) Representative: **Dost, Wolfgang,**
**Dr.rer.nat.,Dipl.-Chem. et al**
**Patent- & Rechtsanwälte Bardehle .**
**Pagenberg . Dost . Altenburg . Frohwitter .**
**Geissler & Partner Galileiplatz 1 Postfach 86**
**06 20**
**D-8000 München 86(DE)**

(54) A distributed terminal driver protocol.

(57) A distributed data processing system, having a plurality of remote terminals connected by a LAN, employs a distributed protocol enabling validation of keyboard input from the terminals to be performed at the seat of intelligence nearest to the terminals, such as in a terminal controller, thus reducing system overhead required for the validation of terminal input.

FIG. I

Data Processing
System 1

## A Distributed Terminal Driver Protocol

### Field of the Invention

This invention pertains to data processing systems having a plurality of character-oriented terminals, each terminal having keyboard input facilities and output display facilities, particularly to "distributed" data processing systems wherein elements of the sytem may be at some remove from one another, and most particularly to a low-overhead method of accepting and validating input from terminals which are removed from elements of the system for which that input is destined.

### Background of the Invention

Data processing systems are almost universally equipped with terminals, enabling an operator seated at a terminal to enter data or commands into the system by means of a device resembling a typewriter keyboard, and to view results and status information from the system on a display device, which may take the form of hard copy printed in paper, or which in recent years is more typically in the form of a cathode ray tube.

Recent developments in computer hardware and software have made it possible for a system comprising a single central processing unit (CPU) to communicate simultaneously with a large number of terminals, or in other words, to service a large number of users simultaneously. It is desirable to construct such systems as "distributed" systems: that is to say, in general, to locate equipments that will be directly utilized by users in the locations where the users would normally be. This is in contrast to the "batch" systems of earlier days of the art, which required users to go to a central "computer room" in order to use the system. Salient examples of distributed systems are "point of sale" systems in which terminals adapted functionally to resemble cash registers are located at the cashier stations in retail establishments, or factory automation systems in which terminals are located at a number of positions on a factory floor.

This has the effect of making the computer design more complex than in the "batch" days because of the necessity of transmitting information over much longer distances. Typical distributed implementations employ a "local area network" (LAN) to carry the information to and from the far-flung terminals. Typically, the CPU communicates by means of a "bus", well-known to those in the art, with a LAN controller, also well-known to those in the art, which transfers the data onto a LAN. The LAN might then carry information directly to terminals connected to the LAN, or in cases where it is desired to have "cluster" of terminals the LAN would carry information to and from one or more "terminal controllers", each of which would have a plurality of terminals, located in a discrete physical area, connected to it.

Generally in the prior art, an application program running in the CPU was the seat of intelligence regarding the form and sequence of character streams that an operator at a terminal might validly input. Therefore, every individual character input from a distributed terminal had to be forwarded through the terminal controller, over the LAN, through the LAN controller, over the bus, and into the CPU for validation. An echo of the character (if the validation was successful) or an error or status message (if the validation was unsuccessful) would be sent from the CPU over the bus to the LAN controller, over the LAN to the terminal controller, and then to the terminal for display. This necessitates that a substantial portion of the system resources, particularly regarding the bus, LAN controller, LAN, and terminal controller, are occupied with handling the data transmissions required for input stream validation.

### Summary of the Invention

The present invention eliminates much of this load on the data transmission elements of the system by providing a protocol in which a description of an expected character stream is sent to the terminal controller; the terminal controller than conducts validation of the stream. The input and validation of an input stream then requires only two system-wide transmissions: one to send the description from the CPU to the terminal controller, and a second one to forward the character stream from the terminal controller to the CPU (if validation was successful; if validation was unsuccessful, the second transmission might be a message from the terminal controller to the CPU informing the CPU that it was unsuccessful).

### Objects of the Invention

It is thus a general object of the present invention to provide improved data processing systems.

It is a particular object of the present invention to lower the overhead required for input character stream validation in distributed data processing systems.

Other objects and advantages of the present invention will be apparent to those skilled in the art, after consulting the ensuing detailed description and the appended drawings, wherein:

## Brief Description of the Drawings

Figure 1 depicts a data processing system in which the present invention is practiced.

Figure 2 (prior art) presents an overview of the validation of an input character stream under the prior art.

Figure 3 presents an overview of the validation of an input character stream under the present invention.

Figure 4 is a high level block diagram of the Network Terminal Driver of the present invention.

Figure 5 illustrates the PROFILE protocol data unit of the present invention.

Figure 6 and 7 depict validation tables employed under the present invention.

Figure 8 illustrates the OK TO SEND protocol data unit of the present invention.

## Detailed Description of the Invention

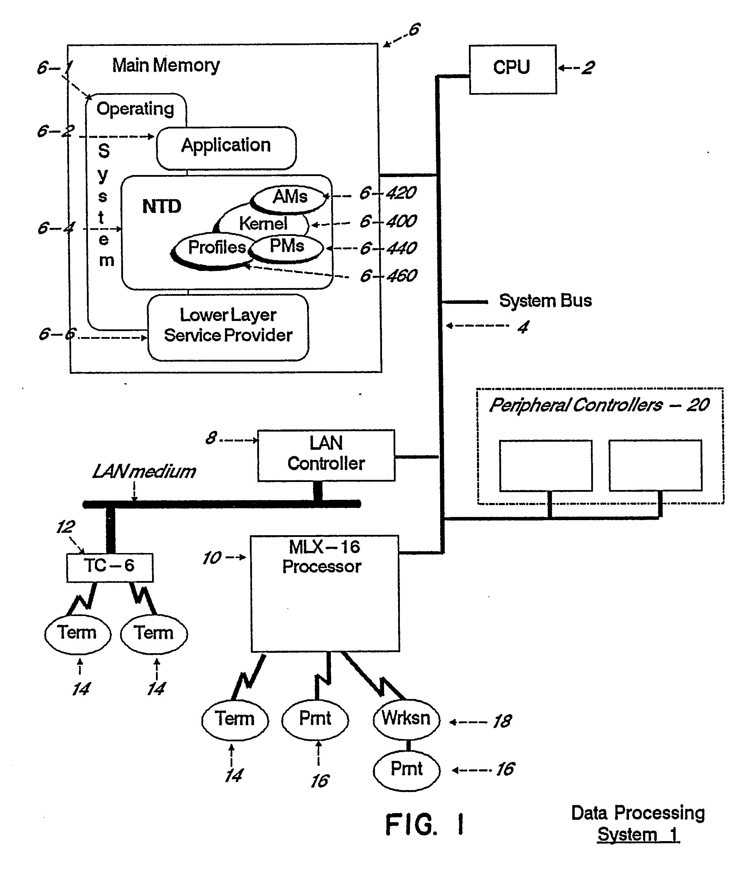

The invention is practiced in a data processing system 1 of which a block diagram is shown in Figure 1. CPU 2 operates upon data which may be stored in main memory 6, under control of programs which also are stored in main memory 6. Application 6-2 would be provided to instruct the system to perform some useful overall function. In support of such application programs, system software would be provided by the computer manufacturer, including operating system 6-1; the function and construction of operating systems are well known to those in the art.

Operators and end users of data processing system 1 would be stationed at terminals 14, printers 16, or work stations 18. Communication between such devices and CPU 2 is seen to take place via system bus 4, and then through one of two paths: the first comprising MLX-16 processor 10; and the second comprising LAN controller 8, LAN (Local Area Network) 22, and the TC-6 terminal controller 12; the present invention is practiced in the latter path.

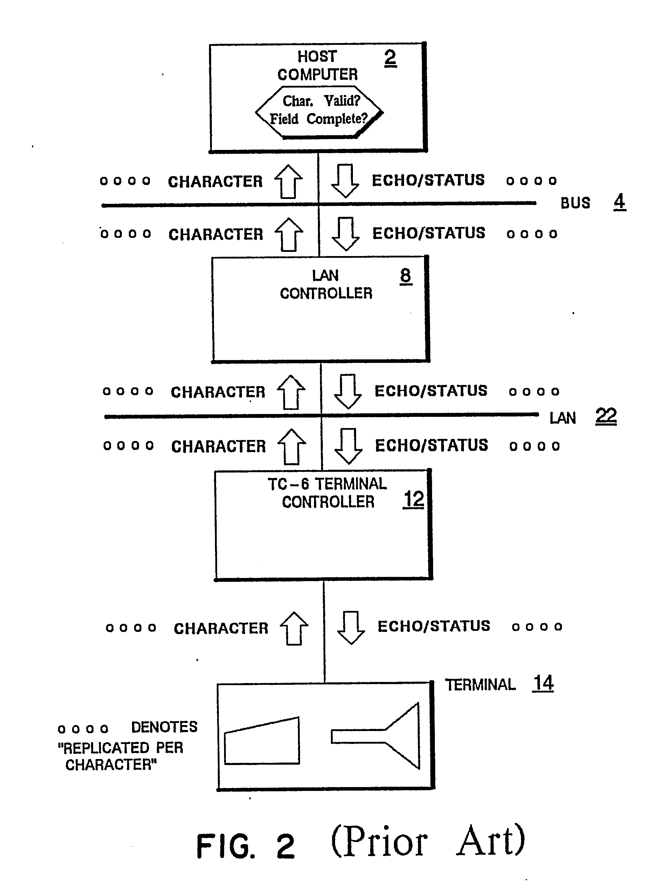

Figure 2 depicts such a path as it would be employed under the prior art. An operator at a terminal 14 inputs data to be processed by CPU 2 under control of an application program 6-2 (not shown in Figure 2). The application program determines the form and sequence of input character stream the operator may provide. Under the prior art, each character input at terminal 14 must be forwarded to CPU 2 for determination of whether it is valid as specified by the applications program;

either an echo of the character (if it is valid) or some indication of its invalidity must then be forwarded back down to the terminal. These numerous transmission, each with its concomitant overhead for protocol considerations, represent a substantial load on these data paths.

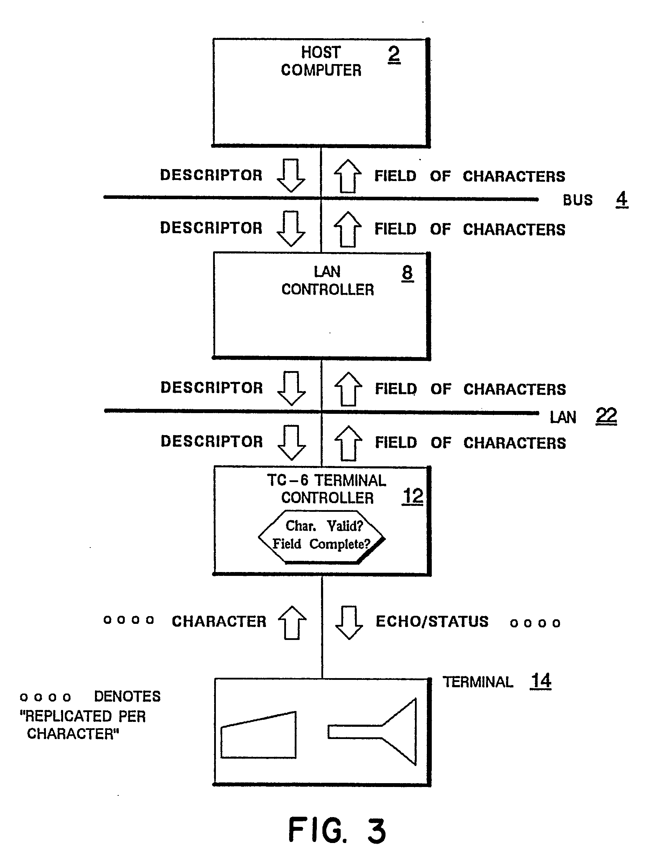

Figure 3 depicts such a path as it is employed under the present invention. The CPU 2 sends a "field descriptor" down to terminal controller 12. Each individual character entered at terminal 14 then need be sent only as far as terminal controller 12 for verification, which is performed within terminal controller 12 under control of the field descriptor. Similarly, character echo or invalidity indication need only be sent from the terminal controller 12. Transmissions over the entire path (bus 4, LAN controller 8, LAN 22) need only be performed twice for an entire string or block of characters: once to forward the field descriptor down to terminal controller 12, and once to forward the validated string of characters from terminal controller 12 up to CPU 2.

Referring again to Figure 1, another pertinent portion of system software is the Network Terminal Driver (NTD) 6-4, among the function of which is to obtain the appropriate field descriptor for a particular transaction at a particular terminal, and to forward the field descriptor to terminal controller 12.

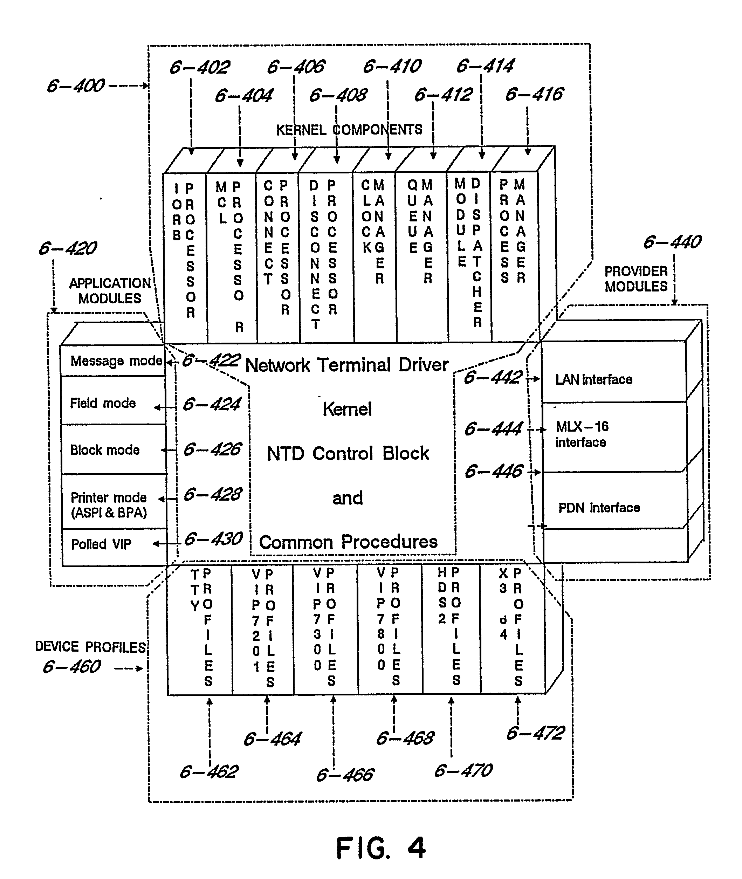

NTD 6-4 is shown in more detail in Figure 4. It is seen to comprise kernel components 6-400, application modules 6-420, provider modules 6-440, and device profiles 6-460. Details on the operation of NTD 6-4 is to be found in U.S. patent application 196,597, filed May 20, 1988.

The kernel components 6-400 comprise the modules that control the flow of execution through the NTD 6-4.

Application modules 6-420 (not to be confused with applications 6-2 (Figure 1)) provide information required for interfacing applications 6-2 with the network in various modes, which are seen to include message mode, field mode, block mode, administrative mode, printer mode, and polled VIP mode. The present invention is practiced in field mode only. Field mode is a mode of operation of a terminal 14 in which the operator is presented with a "template" on the display representing one or more "fields", with a visual indication of where he is to input characters. For example, a portion of the screen might display the legend
"City, State, ZIP Code:                    "
where the underlining represents the positions at which the operator is to input characters. (On a typical video display, the representation would probably be done with reverse video highlighting, rather than underlining.)

Provider modules 6-440 handle the actual transmission of data to and from the network.

Device profiles 6-460 provide information regarding the characteristics of various terminals that may be connected to the network.

Communication between NTD 6-4 and terminals on the network is accomplished by the transmission of discrete blocks of information known as "protocol data units" (PDU's). Methods of sending, routing, receiving and interpreting such discrete blocks are well known to those in the art. Assuming that a path has been established between an application 6-2 and a terminal 14 by such methods, the present invention will now be expostulated using the example field given above:
"City, State, ZIP Code:                    "

This input field comprises three "subfields": in the first, only alphabetic characters plus certain (but not all) punctuation characters would be expected. For example, there might be a town called "So. O'Grady", but there would not be any town names containing such things as per-cent signs or exclamation marks or the like. The second subfield should contain only alphabetic characters, and the third should contain only digits. (There is á distinction between "digit" data and "numeric" data: digit data may contain only the digits 0-9; while numeric data may contain these digits and also a plus sign, minus sign, commas, or periods (decimal points). Thus, "-3.141593" would be valid as numeric data, but not as digit data.)

To request and validate such a field under the present invention requires NTD 6-4 to send to the terminal controller 12 associated with the subject terminal 14 two PDU's: a "PROFILE" PDU and an "OK TO SEND" PDU. The PROFILE PDU includes a "validation table" which, as will be described below, specifies attributes corresponding to any character that may be input from the current terminal, while the OK TO SEND PDU specifies the particular attributes that are considered valid for the current field. The PROFILE PDU need only be sent once for an entire session, but an OK TO SEND PDU must be sent for each field of input expected by an application 6-2.

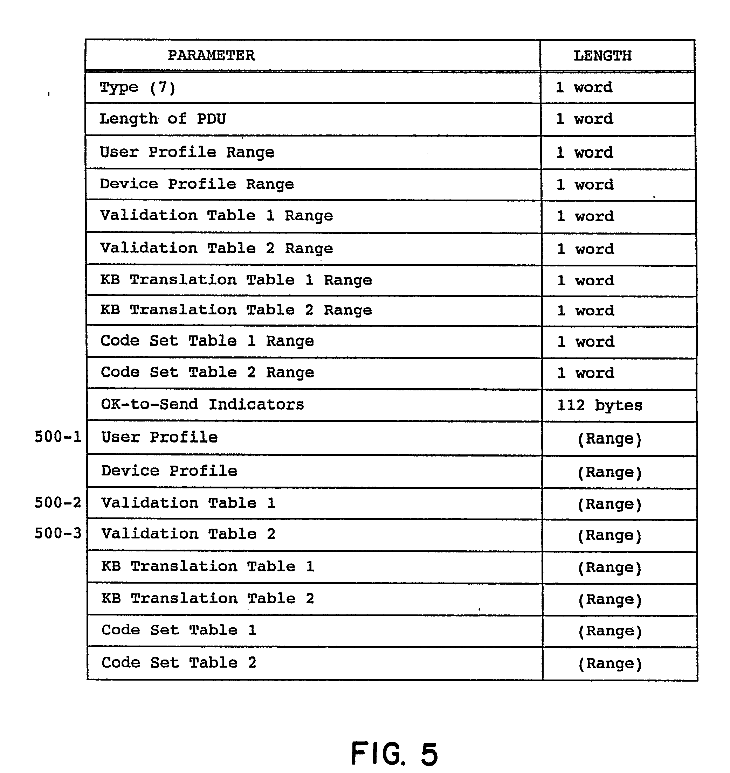

The PROFILE PDU is shown in Figure 5; it is identified by its Type field having a value of 7. User profile field 500-1 specifies, among other things, the validation table type: the present example will assume a "standard" validation table, suitable for use with a standard ASCII keyboard. Other validation tables may be provided for any terminal.

The validation table itself is provided in two portions: Validation Table 1, field 500-2; and Validation Table 2, field 500-3. These comprise, as previously stated, the "standard" validation table.

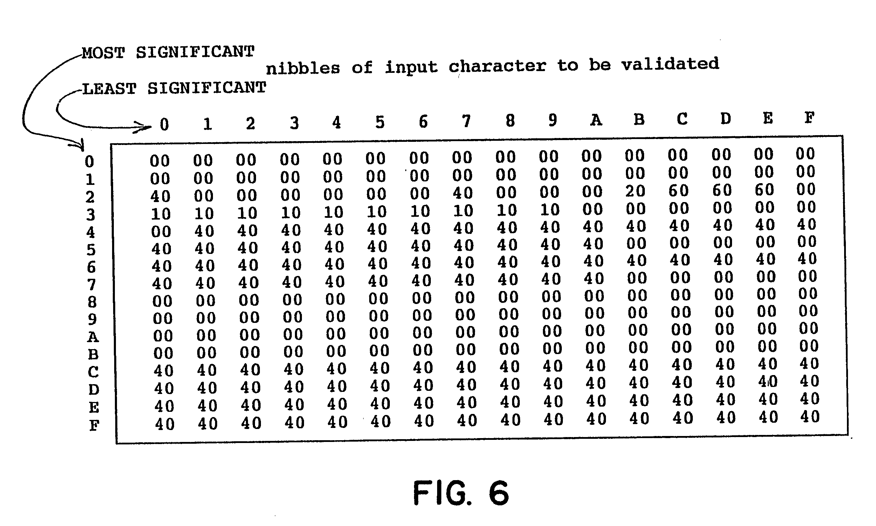

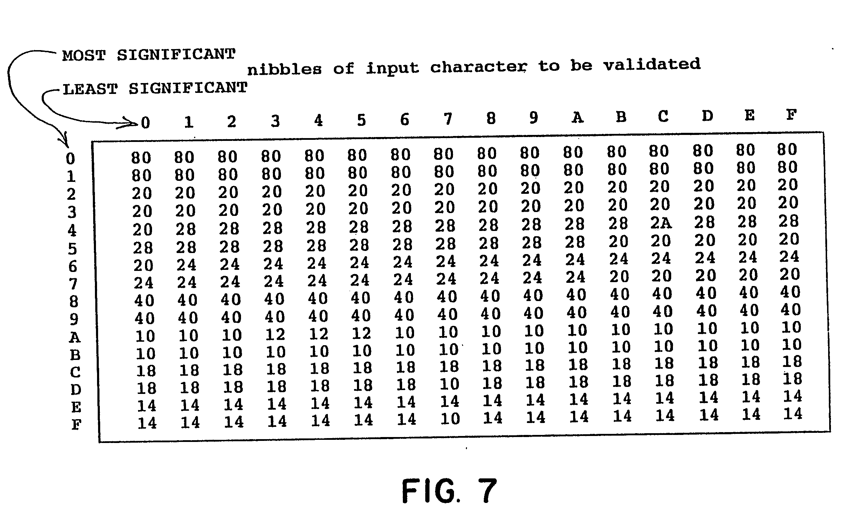

Validation Tables 1 and 2 are depicted in Figures 6 and 7 respectively. Validation Table 2 is used only in certain circumstances when control characters or special characters such as foreign characters will be accepted as valid input. The present example will only use Validation Table 1, since it expects no such characters in the input stream.

NOTE: In the following discussion, the letter "X" will be used to represent the word "hexadecimal:. For example, the legend "X20" should be read as "hexadecimal twenty".

NOTE: In the following discussion, but positions in a byte will be referred to as positions 0-7, with 0 being the most significant position; bit positions in a 16-bit word will be referred to as positions 0-F, with 0 being the most significant position.

From comparison of the ASCII code with the byte entries in Validation Table 1, it will be apparent from Figure 6 that the byte entries are set up according to the following rules:

entries corresponding to control characters and special characters have no bits set;

entries corresponding to digits have bit 3 set;

entries corresponding to alphabetic characters have bit bit 1 set;

entries corresponding to characters deemed acceptable in conjunction with alphabetic characters (namely, SPACE (X20), APOSTROPHE (X27), COMMA (X2C), MINUS SIGN (X2D), PERIOD (X2E), and APOSTROPHE (X60)) have bit 1 set;

entries corresponding to characters other than digits deemed to be acceptable in numeric input (namely PLUS SIGN (X2B), COMMA (X2C), MINUS SIGN (X2D), AND PERIOD (decimal point) (X2E)) have bit 2 set;

thus, the only entries with two bits set are the entries corresponding to characters that are acceptable in two kinds of input-- namely, COMMA (X2C), minus sign (or hyphen) (X2D), and PERIOD (or decimal point) (X2E), which are all acceptable in both alphabetic and numeric input.

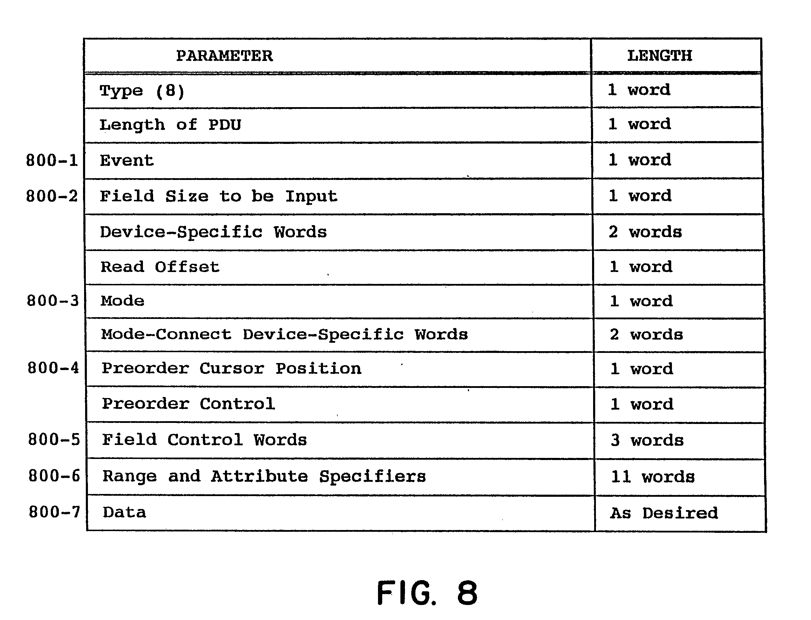

To prompt the operator to provide the input stream being used as the example NTD 6-4 would forward an OK TO SEND PDU to the terminal controller 12 associated with the subject terminal 14. The OK TO SEND PDU is depicted in Figure 8; it is identified by its Type field having a value of 8.

The Event field 800-1 would signify a DATA event (as opposed to, perhaps a SIGNAL event which might request the terminal to report its status).

Field 800-2 specifies the Field Size, that is, the number of characters the operator will be expected to input.

Mode field 800-3 specifies the mode in which the current transfer is to be made, and in the present example would specify Field Mode since, as previously discussed, that is the mode in which the invention is practiced.

Preorder Cursor Position 800-4 would cause the cursor on the terminal screen to be positioned at the beginning of the operator's "template" for the current input; provision of the template is discussed below in conjunction with Data field 800-7. ·

Field Control Words 800-5 include a subfield which, if non-zero, indicates that control characters or special characters are to be input, and that validation will be according to Validation Table 2. In the present example this subfield will be zero, and thus validation will be according to Validation Table 1.

Data field 800-7 would contain the legend
"City, State, ZIP Code:                    "
which causes this prompt and "template" to appear on the screen for the operator to see. As discussed, field 800-4 would have been provided to position the cursor at the first underlined position, that is, the position where operator input is to begin. It is seen that the input field comprises 3 subfields: the CITY subfield in which alphabetic data is expected; the STATE subfield in which alphabetic data is expected, and the ZIP subfield in which digit data is expected.

The specification of these subfields are provided in Range and Attribute (RA) Specifiers field 800-6, which as a size of 11 words. Two consecutive zero words signify the end of an input field; thus, since one word is required for specifying each subfield, an input field is limited to having a maximum of nine subfields. Each of the words for specifying a subfield contains the range (size) of its subfield in its left byte, and the subfield attributes in its right byte. Hence, each such word is known as a "Range-Attribute Pair", or "RA Pair".

The attribute byte specifies the validation to be performed on the subfield according to:
X00: No validation.
X10: Digit input expected.
X30: Numeric input expected (digits, + - , .)
X40: Alphabetic input expected. (Including certain punctuation, as discussed.)
X50: Alpha-Digit input expected (Alphabetic input or digits, intermixed).
X70: Alphanumeric input expected (Alphabetic and numeric input, intermixed).

Thus, for the present example, the Range and Attribute Specifiers field 800-6 will contain:
Word 1: Decimal 23 (size of the CITY subfield) in the left byte, and X40 (specifying alphabetic validation) in the right byte;
Word 2: 2 (size of the STATE subfield) in the left byte and X40 (specifying alphabetic validation) in the right byte;
Word 3: 5 (size of the ZIP subfield) in the left byte, and X10 (specifying digit validation) in the right byte;
Words 4,5: ZEROs, specifying end of input field;
Words 6-11: Don't matter in this case.

It is assumed for purposes of the present example that the operator intends to type the city name "So. O'Grady", followed by sufficient spaces to fill out the City subfield; then the state abbreviation "MA", then the ZIP code "01773". It will further be assumed that the operator makes the common typographical error of typing "So. )" instead of "So. O"; that is, that he depresses the shift key and then hits the ZERO key instead of the letter-O key, resulting in the input of a right parenthesis, which is not valid in alphabetic input. Validation proceeds as follows:

The operator types the first character, an ASCII "S", which has a hexadecimal value of 53. It is forwarded to the terminal controller 12, which uses the character to access Validation Table 1: the first digit, 5, selectes row 5 of the table, while the second digit, 3, selects column 3 of the table. The table entry of X40 thus specified is retrieved, and is ANDed with the attribute byte for this subfield (the right byte of word 1 of field 800-6) which is also X40. According to the method of the present invention, the criterion for correct validation is that the result of this ANDing be non-zero; ANDing an X40 with an X40 yields an X40, which is non-zero, thus indicating that the "S" typed by the operator is valid for the present subfield.

Similarly, when the operator types the "o" (X6F), the validation table is accessed at row 6, column F, to yield X40, which when ANDed with the attribute byte of X40 yields X40-- since this is non-zero, the "o" is valid for the present subfield.

Next the operator inputs the period (X2E). The validation table is accessed at row 2, column E, to yield X60. X60 is ANDed with the attribute byte of X40, yielding an output of X40; this being non-zero, the period is found valid in the current subfield.

The operator next types a space (X20), which causes an X40 to be retrieved from the validation table; as with the "S" and the "o", this results in an indication of validity.

In the assumed example, the operator then mistakenly types a right parenthesis (X29). Accessing Validation Table 1 at row 2, column 9 yields X00. ANDing this with the attribute byte of X40 yields ZERO-- the criterion for invalidity. An appropriate action can accordingly be taken, such as signalling the operator by outputting a BELL character to the terminal and backing up the cursor to the position of the invalid character.

One skilled in the art will have no need of following the present example to its conclusion, but can infer the following points regarding the method of the present invention:

1. Inputting of any control character or special character will cause X00 to be retrieved from the validation table, which when ANDED with any of the attribute bytes recited will yield ZERO, the criterion of invalidity. Thus control characters and special characters will never be found valid for digit, numeric, alphabetic, alpha-digit, or alphanumeric subfields.

2. Inputting of any digit (0-9) will yield X10 from the validation table. This will produce nonzero results when ANDed with any of the recited attribute bytes except X40 (alphabetic). This, a digit will be found valid in any subfield except an alphabetic subfield.

3. Inputting of any letter (A-Z, a-z) or a space or apostrophe will retrieve X40 from the validation table. ANDing X40 with attribute bytes X40 (alphabetic), X50 (alpha-digit), or X70 (alphanumeric) will produce non-zero results; ANDing with attribute bytes X10 (digit) or X30 (numeric) produces ZERO results. Letters and space or apostrophe are thus valid in any subfields except digit and numeric subfields.

4. Inputting a plus sign (X2B) will retrieve X20 from the validation table. Through reasoning similar to the foregoing, a plus sign will be found to be valid only in numeric and alphanumeric subfields.

5. Inputting a comma, minus sign (hyphen), or period (decimal point) will cause retrieval of X60 from the validation table. This is seen to indicate validity for any of the recited attribute bytes except X10, that is, for any subfield type except digit.

One skilled in the art will appreciate that the forwarding to the Terminal Controller 12, the seat of intelligence nearest to the terminal, of the validation table (in the PROFILE PDU) and the Range-Attribute pairs (in the OK TO SEND DPU) constitutes a transmission-efficient means of enabling verification of input fields as close as possible to the terminals, allowing the input of a validated field with only two system-wide data transfers-- the OK TO SEND PDU from CPU 2, and a DATA PDU (not discussed), containing the validated field, to CPU 2.

The invention may be embodied in other specific forms without departing from the spirit thereof. The invention is intended to be embraced by the appended claims rather than by the particular embodiment described above.

That which is regarded as novel and desired to be secured by Letters Patent of the United States is:

## Claims

1. In a digital data system comprising
a CPU having one or more input/output ports;
a plurality of terminals, each terminal having display means and keyboard means for entering characters; and
a data transmission network for operatively connecting the terminals to ports of the CPU, the data transmission network including a terminal control device for communicating with certain of the terminals and for multiplexing transmission intended for or originating from the certain terminals,
an improvement comprising in combination:
means in the CPU for forwarding to the terminal control device a description of the characters expected as input from each certain terminal;
means in the terminal control device for:
receiving and storing the descriptions;
receiving characters entered from the keyboard of each certain terminal;
echoing each character received from the keyboard of a terminal to the display of that terminal;
checking each received character for validity according to the corresponding description, and for displaying indications of invalidity on the sending terminal;
assembling strings of validated characters received from each terminal;
determining when a string of characters is complete according to the corresponding descriptor; and
forwarding completed strings of characters to the CPU.

FIG. I

Data Processing
System 1

FIG. 2 (Prior Art)

HOST
COMPUTER    **2**

DESCRIPTOR ⇩ | ⇧ FIELD OF CHARACTERS

BUS **4**

DESCRIPTOR ⇩ | ⇧ FIELD OF CHARACTERS

LAN
CONTROLLER    **8**

DESCRIPTOR ⇩ | ⇧ FIELD OF CHARACTERS

LAN **22**

DESCRIPTOR ⇩ | ⇧ FIELD OF CHARACTERS

TC−6 TERMINAL
CONTROLLER   **12**

Char. Valid?
Field Complete?

o o o o CHARACTER ⇧ | ⇩ ECHO/STATUS  o o o o

TERMINAL **14**

o o o o DENOTES
"REPLICATED PER
CHARACTER"

# FIG. 3

EP 0 371 377 A2

6-400 --->

6-402   6-406   6-410   6-414
6-404   6-408   6-412   6-416

KERNEL COMPONENTS

| I P O R B | M C L | C O N N E C T | D I S C O N N E C T | C M L O C K | Q U E U E | M O D U L E | P R O C E S S |
| P R O C E S S O R | P R O C E S S O R | P R O C E S S O R | P R O C E S S O R | M A N A G E R | M A N A G E R | D I S P A T C H E R | M A N A G E R |

6-420

APPLICATION MODULES

6-440

PROVIDER MODULES

| Message mode | 6-422 Network Terminal Driver | LAN interface |
| Field mode | 6-424 | Kernel | 6-442 |
| Block mode | 6-426 | NTD Control Block | 6-444 MLX-16 interface |
| Printer mode (ASPI & BPA) | 6-428 | and | 6-446 |
| Polled VIP | 6-430 | Common Procedures | PDN interface |

| T P T R T Y O F I L E S | V P I R P O 7 F 2 I 0 L 1 E S | V P I R P O 7 F 3 I 0 L 0 E S | V P I R P O 7 F 8 I 0 L 0 E S | H P D R S O 2 F I L E S | X P 3 R d O 4 F I L E S |

DEVICE PROFILES
6-460 --->

6-464          6-468          6-472

6-462          6-466          6-470

FIG. 4

| PARAMETER | LENGTH |
|---|---|
| Type (7) | 1 word |
| Length of PDU | 1 word |
| User Profile Range | 1 word |
| Device Profile Range | 1 word |
| Validation Table 1 Range | 1 word |
| Validation Table 2 Range | 1 word |
| KB Translation Table 1 Range | 1 word |
| KB Translation Table 2 Range | 1 word |
| Code Set Table 1 Range | 1 word |
| Code Set Table 2 Range | 1 word |
| OK-to-Send Indicators | 112 bytes |
| User Profile | (Range) |
| Device Profile | (Range) |
| Validation Table 1 | (Range) |
| Validation Table 2 | (Range) |
| KB Translation Table 1 | (Range) |
| KB Translation Table 2 | (Range) |
| Code Set Table 1 | (Range) |
| Code Set Table 2 | (Range) |

# FIG. 5

PROFILE PDU

MOST SIGNIFICANT

nibbles of input character to be validated

LEAST SIGNIFICANT

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | 00 | 00 | 00 | 00 | 00 | 00 | 00 | 00 | 00 | 00 | 00 | 00 | 00 | 00 | 00 | 00 |
| 1 | 00 | 00 | 00 | 00 | 00 | 00 | 00 | 00 | 00 | 00 | 00 | 00 | 00 | 00 | 00 | 00 |
| 2 | 40 | 00 | 00 | 00 | 00 | 00 | 00 | 40 | 00 | 00 | 00 | 20 | 60 | 60 | 60 | 00 |
| 3 | 10 | 10 | 10 | 10 | 10 | 10 | 10 | 10 | 10 | 10 | 00 | 00 | 00 | 00 | 00 | 00 |
| 4 | 00 | 40 | 40 | 40 | 40 | 40 | 40 | 40 | 40 | 40 | 40 | 40 | 40 | 40 | 40 | 40 |
| 5 | 40 | 40 | 40 | 40 | 40 | 40 | 40 | 40 | 40 | 40 | 40 | 00 | 00 | 00 | 00 | 00 |
| 6 | 40 | 40 | 40 | 40 | 40 | 40 | 40 | 40 | 40 | 40 | 40 | 40 | 40 | 40 | 40 | 40 |
| 7 | 40 | 40 | 40 | 40 | 40 | 40 | 40 | 40 | 40 | 40 | 40 | 00 | 00 | 00 | 00 | 00 |
| 8 | 00 | 00 | 00 | 00 | 00 | 00 | 00 | 00 | 00 | 00 | 00 | 00 | 00 | 00 | 00 | 00 |
| 9 | 00 | 00 | 00 | 00 | 00 | 00 | 00 | 00 | 00 | 00 | 00 | 00 | 00 | 00 | 00 | 00 |
| A | 00 | 00 | 00 | 00 | 00 | 00 | 00 | 00 | 00 | 00 | 00 | 00 | 00 | 00 | 00 | 00 |
| B | 00 | 00 | 00 | 00 | 00 | 00 | 00 | 00 | 00 | 00 | 00 | 00 | 00 | 00 | 00 | 00 |
| C | 40 | 40 | 40 | 40 | 40 | 40 | 40 | 40 | 40 | 40 | 40 | 40 | 40 | 40 | 40 | 40 |
| D | 40 | 40 | 40 | 40 | 40 | 40 | 40 | 40 | 40 | 40 | 40 | 40 | 40 | 40 | 40 | 40 |
| E | 40 | 40 | 40 | 40 | 40 | 40 | 40 | 40 | 40 | 40 | 40 | 40 | 40 | 40 | 40 | 40 |
| F | 40 | 40 | 40 | 40 | 40 | 40 | 40 | 40 | 40 | 40 | 40 | 40 | 40 | 40 | 40 | 40 |

# FIG. 6

STANDARD VALIDATION TABLE 1

EP 0 371 377 A2

EP 0 371 377 A2

MOST SIGNIFICANT
nibbles of input character to be validated
LEAST SIGNIFICANT

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | 80 | 80 | 80 | 80 | 80 | 80 | 80 | 80 | 80 | 80 | 80 | 80 | 80 | 80 | 80 | 80 |
| 1 | 80 | 80 | 80 | 80 | 80 | 80 | 80 | 80 | 80 | 80 | 80 | 80 | 80 | 80 | 80 | 80 |
| 2 | 20 | 20 | 20 | 20 | 20 | 20 | 20 | 20 | 20 | 20 | 20 | 20 | 20 | 20 | 20 | 20 |
| 3 | 20 | 20 | 20 | 20 | 20 | 20 | 20 | 20 | 20 | 20 | 20 | 20 | 20 | 20 | 20 | 20 |
| 4 | 20 | 28 | 28 | 28 | 28 | 28 | 28 | 28 | 28 | 28 | 28 | 28 | 2A | 28 | 28 | 28 |
| 5 | 28 | 28 | 28 | 28 | 28 | 28 | 28 | 28 | 28 | 28 | 28 | 20 | 20 | 20 | 20 | 20 |
| 6 | 20 | 24 | 24 | 24 | 24 | 24 | 24 | 24 | 24 | 24 | 24 | 24 | 24 | 24 | 24 | 24 |
| 7 | 24 | 24 | 24 | 24 | 24 | 24 | 24 | 24 | 24 | 24 | 24 | 20 | 20 | 20 | 20 | 20 |
| 8 | 40 | 40 | 40 | 40 | 40 | 40 | 40 | 40 | 40 | 40 | 40 | 40 | 40 | 40 | 40 | 40 |
| 9 | 40 | 40 | 40 | 40 | 40 | 40 | 40 | 40 | 40 | 40 | 40 | 40 | 40 | 40 | 40 | 40 |
| A | 10 | 10 | 10 | 12 | 12 | 12 | 10 | 10 | 10 | 10 | 10 | 10 | 10 | 10 | 10 | 10 |
| B | 10 | 10 | 10 | 10 | 10 | 10 | 10 | 10 | 10 | 10 | 10 | 10 | 10 | 10 | 10 | 10 |
| C | 18 | 18 | 18 | 18 | 18 | 18 | 18 | 18 | 18 | 18 | 18 | 18 | 18 | 18 | 18 | 18 |
| D | 18 | 18 | 18 | 18 | 18 | 18 | 18 | 10 | 18 | 18 | 18 | 18 | 18 | 18 | 18 | 18 |
| E | 14 | 14 | 14 | 14 | 14 | 14 | 14 | 14 | 14 | 14 | 14 | 14 | 14 | 14 | 14 | 14 |
| F | 14 | 14 | 14 | 14 | 14 | 14 | 14 | 10 | 14 | 14 | 14 | 14 | 14 | 14 | 14 | 14 |

# FIG. 7

STANDARD VALIDATION TABLE 2

| PARAMETER | LENGTH |
|---|---|
| Type (8) | 1 word |
| Length of PDU | 1 word |
| Event | 1 word |
| Field Size to be Input | 1 word |
| Device-Specific Words | 2 words |
| Read Offset | 1 word |
| Mode | 1 word |
| Mode-Connect Device-Specific Words | 2 words |
| Preorder Cursor Position | 1 word |
| Preorder Control | 1 word |
| Field Control Words | 3 words |
| Range and Attribute Specifiers | 11 words |
| Data | As Desired |

800-1 Event
800-2 Field Size to be Input
800-3 Mode
800-4 Preorder Cursor Position
800-5 Field Control Words
800-6 Range and Attribute Specifiers
800-7 Data

# FIG. 8

OKAY TO SEND DPU

EP 0 371 377 A2